# EUROPÄISCHE PATENTANMELDUNG

(11) **EP 3 502 853 A1**
(43) Veröffentlichungstag der Anmeldung: **26.06.2019**
(21) Anmeldenummer: 18210954.6
(22) Anmeldetag: 07.12.2018
(51) Int. Cl.: G06F 3/041, A47L 15/42, F24C 7/08

(54) **BEDIENELEMENT, ELEKTRISCHES GERÄT UND VERFAHREN ZUM AUSWERTEN EINES BEDIENELEMENTS**

(30) Priorität: 19.12.2017 DE 102017130423
(71) Anmelder: Miele & Cie. KG, 33332 Gütersloh (DE)
(72) Erfinder: Schacht, Florian, 33332 Gütersloh (DE); Banmann, Johann, 33334 Gütersloh (DE)

(57) **Zusammenfassung**

Die Erfindung betrifft ein Bedienelement für ein elektrisches Gerät, aufweisend einen Touchscreen (1), mindestens eine Touchtaste (2), einen dem Touchscreen (1) zugeordneten Touchscreen-Sensor (3), welcher eine Abfrage-Matrixstruktur aus n Zeilen (31) und m Spalten (32) aufweist, und einen Touch-Controller (4), welcher ausgebildet ist, jede Touchtaste (2) und den Touchscreen (1) über eine sukzessive Abfrage aller Kombinationen der n Zeilen (31) und m Spalten (32) zu scannen. Der Touch-Controller (4) ist weiterhin ausgebildet, ein Scanfenster um eine Zeile (31) und eine Spalte (32) des Touchscreen-Sensors (3) zu schalten, deren gemessenes Touchsignal maximal ist, wobei das Scanfenster aus einer Anzahl kleiner n benachbarter Scanfenster-Zeilen und aus einer Anzahl kleiner m benachbarter Scanfenster-Spalten aufgebaut ist und der Touch-Controller (4) ist ausgebildet, innerhalb des geschalteten Scanfensters die kleiner n benachbarten Scanfenster-Zeilen und die kleiner m Scanfenster-Spalten erneut zu scannen und eine Position einer Betätigung auf dem Touchscreen (1) zu berechnen. Ferner betrifft die Erfindung ein elektrisches Gerät, das das Bedienelement enthält und ein entsprechendes Verfahren zum Auswerten des Bedienelements.

## Beschreibung

Die Erfindung betrifft ein Bedienelement, ein elektrisches Gerät und ein Verfahren zum Auswerten eines Bedienelements. Insbesondere betrifft die Erfindung ein Bedienelement für ein elektrisches Gerät, das elektrische Gerät und ein Verfahren zum Auswerten des Bedienelements des elektrischen Geräts. Das Bedienelement weist einen Touchscreen, mindestens eine Touchtaste, einen dem Touchscreen zugeordneten Touchscreen-Sensor, welcher eine Abfrage-Matrixstruktur aus n Zeilen und m Spalten aufweist, und einen Touch-Controller auf, welcher ausgebildet ist, jede Touchtaste und den Touchscreen über eine sukzessive Abfrage aller Kombinationen der n Zeilen und m Spalten zu scannen.

Ein derartiges Bedienelement ist kostspielig, weil zwei separate Touch-Controller für die Touchtasten und den Touchscreen benötigt werden und für jeden Touch-Controller jeweils eine Touch-Peripherieschaltung benötigt wird. Zudem ist der dem Touchscreen zugeordnete Touch-Controller nicht frei programmierbar sondern nur parametrierbar, wodurch nicht alle gewünschten Funktionen in dem Bedienelement implementierbar sind. Weiterhin besteht ein Bedarf an einer schnellen Auswertung des Bedienelements insbesondere des Touchscreens, um eine flüssige Bedienung mit schnellen Reaktionen bereitzustellen.

Der Erfindung stellt sich somit das Problem, ein Bedienelement, ein elektrisches Gerät und ein Verfahren zum Auswerten eines Bedienelements bereitzustellen, welche kostengünstig sind.

Erfindungsgemäß wird dieses Problem durch ein Bedienelement mit den Merkmalen des Patentanspruchs 1 gelöst, ein elektrisches Gerät mit den Merkmalen des Patentanspruchs 8 und ein Verfahren mit den Merkmalen des Patentanspruchs 10. Vorteilhafte Ausgestaltungen und Weiterbildungen der Erfindung ergeben sich aus den nachfolgenden Unteransprüchen.

Die mit der Erfindung erreichbaren Vorteile bestehen neben einer flüssigen Bedienung des Bedienelements darin, dass der Touchscreen schnell, insbesondere < 10 ms, ausgewertet wird. Zudem ist das Bedienelement kostengünstig, denn zur Auswertung der Touchtasten und des Touchscreens ist nur ein einziger Touch-Controller notwendig.

Erfindungsgemäß ist vorgesehen, dass der Touch-Controller ausgebildet ist, ein Scanfenster um eine Zeile und eine Spalte des Touchscreen-Sensors zu schalten, deren gemessenes Touchsignal maximal ist, wobei das Scanfenster aus einer Anzahl kleiner n benachbarter Scanfenster-Zeilen und aus einer Anzahl kleiner m benachbarter Scanfenster-Spalten aufgebaut ist und dass der Touch-Controller ausgebildet ist, innerhalb des geschalteten Scanfensters die kleiner n benachbarten Scanfenster-Zeilen und die kleiner m Scanfenster-Spalten erneut zu scannen und eine Position einer Betätigung auf dem Touchscreen zu berechnen. Ein derartiger Touch-Controller ist kostengünstig. Zudem kann durch diese Ausbildung des Touch-Controllers der Touchscreen auf schnelle Eingaben, wie z.B. bei einer Wischgeste erforderlich, reagieren. Dies wird dadurch ermöglicht, dass der erneute Scan innerhalb des Scanfensters durchgeführt wird, das aus weniger Scanfenster-Zeilen und Scanfenster-Spalten besteht als die Abfrage-Matrixstruktur Zeilen und Spalten aufweist. Der derart ausgebildete Touch-Controller ist zudem universal einsetzbar.

Bei dem Touchscreen kann es sich um ein optisches System, einen resistiven Touchscreen, einen kapazitiven Touchscreen, einen induktiven Touchscreen oder ein hybrides System handeln. Bevorzugt ist der Touchscreen ein kapazitiver Touchscreen. Ein kapazitiver Touchscreen ist sowohl mit dem bloßen Finger als auch einem leitfähigen Eingabestift oder dergleichen bedienbar, ohne dass ein spezieller Druck oder eine mechanische Einwirkung auf ihn ausgeübt werden muss. Er ist daher leicht und einfach bedienbar. Der Größe des Touchscreens ist frei wählbar. Beispielsweise weist der Touchscreen eine Größe 7 Zoll oder weniger auf.

Bei den Touchtasten kann es sich um optische Tasten, resistive Tasten, kapazitive Tasten oder induktive Tasten handeln. Die Anzahl an Touchtasten ist frei wählbar. Sie kann beispielsweise bis zu zwölf Touchtasten betragen. Jeder Touchtaste ist bevorzugt eine Kontaktfläche zugeordnet, die jeweils ein Scannen der enstprechenden Touchtaste durch den Touch-Controller ermöglicht.

Bevorzugt sind der Touch-Controller und die Kontaktflächen auf einer Leiterkarte angeordnet, auf der weiterhin ein Stecker für den Touchscreen-Sensor angeordnet ist. Weiterhin weist das Bedienelement bevorzugt ein Display auf, das zwischen dem Touchscreen-Sensor und der Leiterkarte angeordnet ist.

In einer bevorzugten Ausführungsform ist der Touch-Controller ausgebildet, das Scannen jeder Zeile und jeder Spalte außerhalb des geschalteten Scanfensters zu deaktivieren. Der Touch-Controller ist daher ausgebildet, das erneute Scannen ausschließlich im geschalteten Scanfenster durchzuführen. D.h. der Touch-Controller ist ausgebildet, zusätzliche Betätigungen außerhalb des Scanfensters zu ignorieren. Solange eine Betätigung auf dem Touchscreen erkannt wird, werden nur die Scanfenster-Zeilen und Scanfenster-Spalten gescannt. Im Sinne der vorliegenden Erfindung sind Scanfenster-Zeilen und Scanfenster-Spalten Zeilen und Spalten der Abfrage-Matrixstruktur, die innerhalb des geschalteten Scanfensters liegen.

Bevorzugt ist der Touch-Controller ausgebildet, bei Detektion einer Betätigung des Touchscreens das Scannen der Touch-Tasten zu deaktivieren. Dadurch kann weiterhin die Auswertung des Bedienelements beschleunigt werden.

Bevorzugt ist das Bedienelement als Single-Touch-Bedienelement ausgebildet. Ein Single-Touch-Bedienelement ist die Displayvariante, welche nur eine Eingabe erlaubt, da es nur eine Berührung pro Aktion erkennen und verarbeiten kann. D.h., es ist keine Mehrfingerbedienung bei dem Bedienelement möglich.

In einer bevorzugten Ausführungsform ist der Touch-Controller als freiprogrammierbarer Mikrocontroller mit einer Touch-Peripherieschaltung ausgebildet. D.h., es ist nicht nur eine Parametrierung sondern vielmehr eine Programmierung des Touch-Controllers möglich. Dadurch sind systemspezifische Funktionen implementierbar und zudem ist der Touch-Controller dadurch weiterhin kostengünstig ausgebildet.

In einer bevorzugten Ausführungsform weist das Bedienelement eine Standby-, Daten-Bus-, Kommunikations-Protokoll- und/oder Update-Funktion auf. Diese Funktionen sind Beispiele für implementierte systemspezifische Funktionen.

Standby, auch als OFF-Mode bezeichnet, ist ein Zustand eines das Bedienelement aufweisenden elektrischen Geräts, in dem das elektrischen Gerät nach einem Ausschalten vergleichsweise wenig Strom verbraucht. Dafür werden alle Verbraucher und Elektroniken im elektrischen Gerät abgeschaltet, bis auf eine Spannungsversorgung für den Touch-Controller. Der Touch-Controller ist ausgebildet, dann nur noch eine EIN/AUS-Taste des elektrischen Geräts in einem so genannten Strom-Spar-Modus zu scannen. D.h., die EIN/AUS-Taste wird beispielweise mit einer Dauer von ca. 1 ms gescannt, dann schaltet sich der Touch-Controller für eine vorbestimmte Zeit beispielsweise ca. 150 ms in einen so genannten Sleep-Modus, in dem er vergleichsweise sehr wenig Strom verbraucht. Nach dem Ablauf der vorbestimmten Zeit wird der Touch-Controller wieder aktiv, um den vorstehend beschriebenen Zyklus von vorne zu beginnen, d.h. er scannt erneut die EIN/AUS-Taste, usw.

Die Daten-Bus-Funktion dient dazu, um zwischen Elektroniken innerhalb des elektrischen Gerätes Daten auszutauschen und basiert auf einem Standard-UART, wobei UART eine Abkürzung für Universal Asynchronous Receiver Transmitter ist.

Die Kommunikations-Protokoll-Funktion dient zum Austausch von Daten, insbesondere, wenn das das Bedienelement aufweisende elektrische Gerät weiterhin mit einem weiteren elektrischen Gerät vernetzt ist.

Die Update-Funktion ist ausgebildet, einzelne Controller wie z.B. der Touch-Controller über eine einheitliche Schnittstelle wie beispielsweise ein optisches Interface oder WLAN (Wireless Local Area Network) mit neuer Software zu aktualisieren.

In einer bevorzugten Ausführungsform ist der Touch-Controller ausgebildet, das Scanfenster zu verschieben. Dies ist insbesondere bei der Auswertung einer Wischgeste vorteilhaft.

Die Erfindung betrifft ferner ein elektrisches Gerät, das ein Bedienelement gemäß einer oder mehreren der vorstehend beschriebenen Ausführungsformen aufweist. Das elektrische Gerät ist kostengünstig und flüssig bedienbar.

In einer bevorzugten Ausführungsform ist das elektrische Gerät ein Backofen, Dampfgarer, Kaffeevollautomat, Pizzaofen, Herd, Mikrowelle, Geschirrspüler, Waschautomat, Trockenautomat und/oder deren Kombinationen. Eine Kombination aus Dampfgarer, Backofen und Mikrowelle wird auch als Dialoggarer bezeichnet. Eine Kombination aus Wasch- und Trockenautomat wird auch als Waschtrockner bezeichnet. Bei dem elektrischen Gerät kann es sich um ein privat oder gewerblich genutztes Gerät handeln.

Die Erfindung betrifft ferner ein Verfahren zum Auswerten eines Bedienelements mit einem Touchscreen, aufweisend folgende Schritte 1) Scannen über eine sukzessive Abfrage von Touchtasten und aller Kombinationen von n Zeilen und m Spalten einer Abfrage-Matrixstruktur aus n Zeilen und m Spalten eines Touchscreen-Sensors; und 2) im Falle einer Detektion einer Betätigung des Touchscreens Schalten eines Scanfensters um eine Zeile und eine Spalte, deren gemessenes Touchsignal maximal ist, wobei das Scanfenster aus einer Anzahl kleiner n benachbarter Scanfenster-Zeilen und aus einer Anzahl kleiner m benachbarter Scanfenster-Spalten aufgebaut ist, und erneutes Scannen der kleiner n benachbarten Scanfenster-Zeilen und der kleiner m Scanfenster-Spalten innerhalb des geschalteten Scanfensters und Berechnen einer Position der Betätigung. Das Verfahren ist kostengünstig und ermöglicht eine schnelle und effektive Bedienung des Bedienelements.

In Bezug auf das Bedienelement beschriebene Ausführungsformen gelten für das elektrische Gerät und das Verfahren entsprechend und umgekehrt.

In einer bevorzugten Ausführungsform wird im Falle einer Detektion einer Betätigung des Touchscreens in Schritt 1) das Scannen der Touchtasten deaktiviert.

Bevorzugt wird während und/oder unmittelbar nach Schalten des Scanfensters um eine Zeile und eine Spalte, deren Touchsignal maximal ist, ein Scannen jeder Zeile und jeder Spalte außerhalb des Scanfensters deaktiviert.

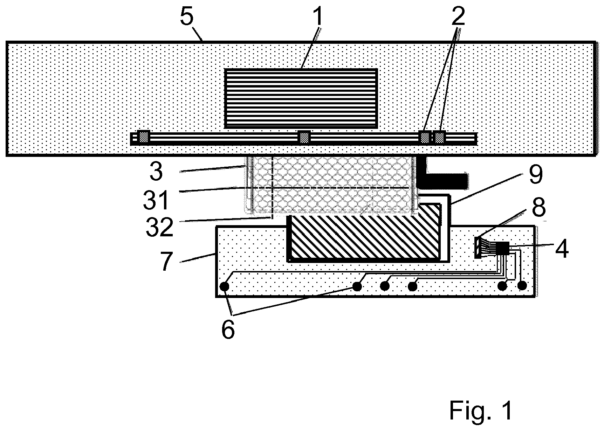

Ein Ausführungsbeispiel der Erfindung ist in den Zeichnungen rein schematisch dargestellt und wird nachfolgend näher beschrieben. Es zeigt schematisch und nicht maßstabsgerecht
Fig. 1 eine Explosionsdarstellung eines erfindungsgemäßen Bedienelements.

Fig. 1 zeigt eine Explosionsdarstellung eines erfindungsgemäßen Bedienelements. Das Bedienelement weist einen Touchscreen 1 und mehrere Touchtasten 2 auf, die in einer Geräteblende 5 integriert sind. Das Bedienelement weist weiterhin einen dem Touchscreen 1 zugeordneten Touchscreen-Sensor 3 auf, welcher eine Abfrage-Matrixstruktur aus n Zeilen 31 und m Spalten 32 aufweist. Ferner weist das Bedienelement Kontaktflächen 6 auf. Jede Kontaktfläche 6 ist jeweils einer Touchtaste 2 zugeordnet. Das Bedienelement weist weiterhin einen Touch-Controller 4 auf, welcher ausgebildet ist, jede Touchtaste 2 und den Touchscreen 1 über eine sukzessive Abfrage aller Kontaktflächen 6 und aller Kombinationen der n Zeilen 31 und m Spalten 32 zu scannen, ein Scanfenster (nicht gezeigt) um eine Zeile 31 und eine Spalte 32 des Touchscreen-Sensors 3 zu schalten, deren gemessenes Touchsignal maximal ist, wobei das Scanfenster aus einer Anzahl kleiner n benachbarter Scanfenster-Zeilen (nicht gezeigt) und aus einer Anzahl kleiner m benachbarter Scanfenster-Spalten (nicht gezeigt) aufgebaut ist, und innerhalb des geschalteten Scanfensters die kleiner n benachbarten Scanfenster-Zeilen und die kleiner m Scanfenster-Spalten erneut zu scannen und eine Position einer Betätigung auf dem Touchscreen 1 zu berechnen. Der Touch-Controller 4 und die Kontaktflächen 6 sind auf einer Leiterkarte 7 angeordnet. Auf der Leiterkarte 7 ist weiterhin ein Stecker 8 für den Touchscreen-Sensor 3 angeordnet. Weiterhin weist das Bedienelement ein Display 9 auf, das zwischen dem Touchscreen-Sensor 3 und der Leiterkarte 7 angeordnet ist.

Das in Fig. 1 gezeigte Bedienelement ist Teil eines elektrischen Geräts (nicht gezeigt). Bei Betrieb des elektrischen Geräts wird das Bedienelement entsprechend dem nachfolgenden Verfahren zum Auswerten des Bedienelements mit dem Touchscreen 1 ausgewertet. Das Verfahren weist folgende Schritte auf: Scannen über eine sukzessive Abfrage der Touchtasten 2 und aller Kombinationen der n Zeilen 31 und m Spalten 32 der Abfrage-Matrixstruktur aus n Zeilen 31 und m Spalten 32 des Touchscreen-Sensors 3; und im Falle einer Detektion einer Betätigung des Touchscreens 1 Schalten eines Scanfensters um eine Zeile 31 und eine Spalte 32, deren gemessenes Touchsignal maximal ist, wobei das Scanfenster aus einer Anzahl kleiner n benachbarter Scanfenster-Zeilen und aus einer Anzahl kleiner m benachbarter Scanfenster-Spalten aufgebaut ist, und erneutes Scannen der kleiner n benachbarten Scanfenster-Zeilen und der kleiner m Scanfenster-Spalten innerhalb des geschalteten Scanfensters und Berechnen einer Position der Betätigung.

### Bezugszeichenliste

- 1: Bedienelement
- 2: Touch-Taste
- 3: Touchscreen-Sensor
- 31: Zeile
- 32: Spalte
- 4: Touch-Controller
- 5: Geräteblende
- 6: Kontaktfläche
- 7: Leiterkarte
- 8: Stecker
- 9: Display

## Patentansprüche

1. Bedienelement für ein elektrisches Gerät, aufweisend einen Touchscreen (1), mindestens eine Touchtaste (2), einen dem Touchscreen (1) zugeordneten Touchscreen-Sensor (3), welcher eine Abfrage-Matrixstruktur aus n Zeilen (31) und m Spalten (32) aufweist, und einen Touch-Controller (4), welcher ausgebildet ist, jede Touchtaste (2) und den Touchscreen (1) über eine sukzessive Abfrage aller Kombinationen der n Zeilen (31) und m Spalten (32) zu scannen,
**dadurch gekennzeichnet, dass**
der Touch-Controller (4) weiterhin ausgebildet ist, ein Scanfenster um eine Zeile (31) und eine Spalte (32) des Touchscreen-Sensors (3) zu schalten, deren gemessenes Touchsignal maximal ist, wobei das Scanfenster aus einer Anzahl kleiner n benachbarter Scanfenster-Zeilen und aus einer Anzahl kleiner m benachbarter Scanfenster-Spalten aufgebaut ist
und wobei der Touch-Controller (4) ausgebildet ist, innerhalb des geschalteten Scanfensters die kleiner n benachbarten Scanfenster-Zeilen und die kleiner m Scanfenster-Spalten erneut zu scannen und eine Position einer Betätigung auf dem Touchscreen (1) zu berechnen.

2. Bedienelement nach Anspruch 1, **dadurch gekennzeichnet, dass** der Touch-Controller (4) ausgebildet ist, das Scannen jeder Zeile (31) und jeder Spalte (32) außerhalb des geschalteten Scanfensters zu deaktivieren.

3. Bedienelement nach Anspruch 1 oder 2, **dadurch gekennzeichnet, dass** der Touch-Controller (4) ausgebildet ist, bei Detektion einer Betätigung des Touchscreens (1) das Scannen der Touch-Tasten (2) zu deaktivieren.

4. Bedienelement nach einem der vorangehenden Ansprüche, **dadurch gekennzeichnet, dass** es als Single-Touch-Bedienelement ausgebildet ist.

5. Bedienelement nach einem der vorangehenden Ansprüche, **dadurch gekennzeichnet, dass** der Touch-Controller (4) als freiprogrammierbarer Mikrocontroller mit einer Touch-Peripherieschaltung ausgebildet ist.

6. Bedienelement nach einem der vorangehenden Ansprüche, **dadurch gekennzeichnet, dass** es eine Standby-, Daten-Bus-, Kommunikations-Protokoll- und/oder Update-Funktion aufweist.

7. Bedienelement nach einem der vorangehenden Ansprüche, **dadurch gekennzeichnet, dass** der Touch-Controller (4) ausgebildet ist, das Scanfenster zu verschieben.

8. Elektrisches Gerät, aufweisend ein Bedienelement nach einem der vorangehenden Ansprüche.

9. Elektrisches Gerät nach Anspruch 8, **dadurch gekennzeichnet, dass** es ein Backofen, Dampfgarer, Kaffeevollautomat, Pizzaofen, Herd, Mikrowelle, Geschirrspüler, Waschautomat, Trockenautomat und/oder deren Kombinationen ist.

10. Verfahren zum Auswerten eines Bedienelements mit einem Touchscreen (1), aufweisend folgende Schritte
- Scannen über eine sukzessive Abfrage von Touchtasten (2) und aller Kombinationen von n Zeilen (31) und m Spalten (32) einer Abfrage-Matrixstruktur aus n Zeilen (31) und m Spalten (32) eines Touchscreen-Sensors (3); und
- im Falle einer Detektion einer Betätigung des Touchscreens (1) Schalten eines Scanfensters um eine Zeile (31) und eine Spalte (32), deren gemessenes Touchsignal maximal ist, wobei das Scanfenster aus einer Anzahl kleiner n benachbarter Scanfenster-Zeilen und aus einer Anzahl kleiner m benachbarter Scanfenster-Spalten aufgebaut ist, und erneutes Scannen der kleiner n benachbarten Scanfenster-Zeilen und der kleiner m Scanfenster-Spalten innerhalb des geschalteten Scanfensters und Berechnen einer Position der Betätigung.
